Europäisches Patentamt

European Patent Office

Office européen des brevets

(11) Veröffentlichungsnummer: **0 182 950**
**A1**

## (12) EUROPÄISCHE PATENTANMELDUNG

(21) Anmeldenummer: 84810582.1

(22) Anmeldetag: 29.11.84

(51) Int. Cl.⁴: **E 06 B 9/205**

(43) Veröffentlichungstag der Anmeldung:
04.06.86 Patentblatt 86/23

(84) Benannte Vertragsstaaten:
AT BE CH DE FR GB IT LI LU NL SE

(71) Anmelder: E. KINDT AG, vormals Hans Kiefer AG
Bahnhofstrasse 60
CH-8112 Otelfingen(CH)

(72) Erfinder: Rypka, Manfred
im Geeren 29
CH-8112 Otelfingen(CH)

(74) Vertreter: White, William et al,
PATENTANWALTS-BUREAU ISLER AG Postfach 6940
Walchestrasse 23
CH-8023 Zürich(CH)

(54) Antriebsvorrichtung für eine Jalousie für Sonnen- und/oder Wetterschutz.

(57) Zur Kraftbegrenzung bei Antrieben von Jalousien für Sonnen-und Wetterschutz ist ein die Drehkraft begrenzendes Element (20) bei der Übergangsstelle von Universalgelenken (13) und Antriebsstange (14) eingesetzt. Dieses besteht aus zwei ineinandergreifenden Hülsen (21, 30), von denen die äussere Hülse (21) innenseitig Rastvertiefungen (22) und die innere Hülse (30) axiale Schlitzöffnungen (31) für die Aufnahme von zylindrischen Körpern (32) aufweisen. Im zentralen Hohlraum (33) ist ein elastisches Druckelement (34) eingesetzt. Ein solches Element (20) lässt sich leicht noch nachträglich einbauen. Durch Wahl der Anzahl zylindrischer Körper (32) und/oder der Shore-Härte des elastischen Druckelementes (34) kann die Kraftbegrenzung an die jeweilige Jalousie angepasst werden.

EP 0 182 950 A1

**Fig. 1**

**Fig. 2**

E. Kindt AG,
**vormals Hans Kiefer AG**

Antriebsvorrichtung für eine
Jalousie für Sonnen- und/
oder Wetterschutz

Die vorliegende Erfindung betrifft eine Antriebsvorrichtung
für eine Jalousie für Sonnen und/oder Wetterschutz gemäss
dem Oberbegriff des unabhängigen Patentanspruchs 1.

Bei Jalousien für den Sonnen- und/oder Wetterschutz wird
zwischen Rolladen, Lamellenstoren und Faltrolläden unterschieden. Allen ist gemeinsam, dass von einer bequemen
Bedienungshöhe aus eine Antriebswelle rotiert werden kann.
Dazu ist es bekannt geworden, die Antriebswelle beispielsweise über ein Kegelgetriebe, eine Kupplungsstange, ein
Iniversalgelenk und eine Antriebsstange anzutreiben. Die
Antriebsstange besitzt zwei Gelenke in derselben Ebene, um das untere freie Ende in eine Kurbel umzuwandeln, und bei Nichtgebrauch die Kurbel zu strecken, damit sie gerade am Fensterrahmen anliegen kann. Die Verbindung zwischen dem Universalgelenk und der Antriebsstange ist als Steckverbindung ausgebildet, indem die Antriebsstange als Zapfen und der Anschlussteil des Universalgelenkes als Hülse ausgebildet sind, wobei dann die Halterung mit einem durchgehenden Stift bewirkt wird.

Infolge des durch die Kurbel ermöglichten grossen Drehmomentes auf die Antriebswelle und damit auf die Jalousie, kann bei Vereisung in der kalten Jahreszeit oder auch durch Ueberdrehen beim oberen Anschlag ein Schaden entstehen, wodurch sogar ganze Jalousien ersetzt werden müssen.

Es ist deshalb eine Aufgabe der Erfindung, einen Weg zu finden, um bei zu hoher Beanspruchung die Kraft zu begrenzen und zwar soll ermöglicht werden, diese Begrenzung der Kraft auch nachträglich bei bestehenden Anlagen ohne verteuernde Nachbearbeitung einzubauen.

Erfindungsgemäss wird dies durch die Merkmale im kennzeichnenden Teil des unabhängigen Patentanspruchs 1 erreicht.

Besonders vorteilhafte Ausführungsformen sind in den abhängigen Patentansprüchen gekennzeichnet.

Ein Ausführungsbeispiel der Erfindung wird nachfolgend anhand der Zeichnung erläutert. Es zeigen:

Fig. 1    eine Ansicht eines Kurbelstangenantriebes mit einer Kraftbegrenzung nach der Erfindung,

Fig. 2    eine Schnittansicht eines kraftbegrenzenden Kupplungselementes gemäss einer axialen Schnittebene, und

Fig. 3    eine Schnittansicht des kraftbegrenzenden Kupplungselementes gemäss der Schnittlinie III - III in Fig. 2.

Der Kurbelstangen-Antrieb in bekannter Ausführungsform besteht aus einer Kupplungsstange 10, die in üblicher Weise in ein nicht dargestelltes Kegelradgetriebe eingesetzt ist. In einem Flansch 11, der zur Befestigung an einem Fensterrahmen mit Bohrungen versehen ist, befindet sich ein Drehlager für diese Kupplungsstange, das zudem in einem Kugelgelenk für den Ausgleich baulicher Toleranzen eingesetzt ist.

Mit der Kupplungsstange 10 ist eine Gelenkgabel 12a für ein Universalgelenk 13 einstückig verbunden.Die Gegengabel 12b ist mit einer Hülse 12 einstückig verbunden. Bei herkömmlichen Antrieben ist die Antriebsstange 14 in diese Hülse 12c eingesetzt.

Antriebsseitig trägt die Antriebsstange 14 einen Handgriff 15 und an ihrem Ende ist mittels eines Stiftes 17 eine Zwischenstange 16 angelenkt, die ihrerseits ebenfalls mittels eines Stiftes 18 mit dem Kurbelgriff 19 gelenkig verbunden ist. Dabei ist es üblich, dass Handgriff 15 und Kurbelgriff 19 als drehbare Teile ausgebildet sind und ferner, dass die Gelenke bei den Stiften 17, 18 mittels federbelasteten Stösseln zwei bevorzugte, um $90^{\circ}$ gedrehte Raststellungen haben.

Erfindungsgemäss ist nun zwischen der Hülse 12c und dem oberen Ende der Antriebsstange 14 ein die Drehkraft begrenzender Einbauteil 20 angeordnet.

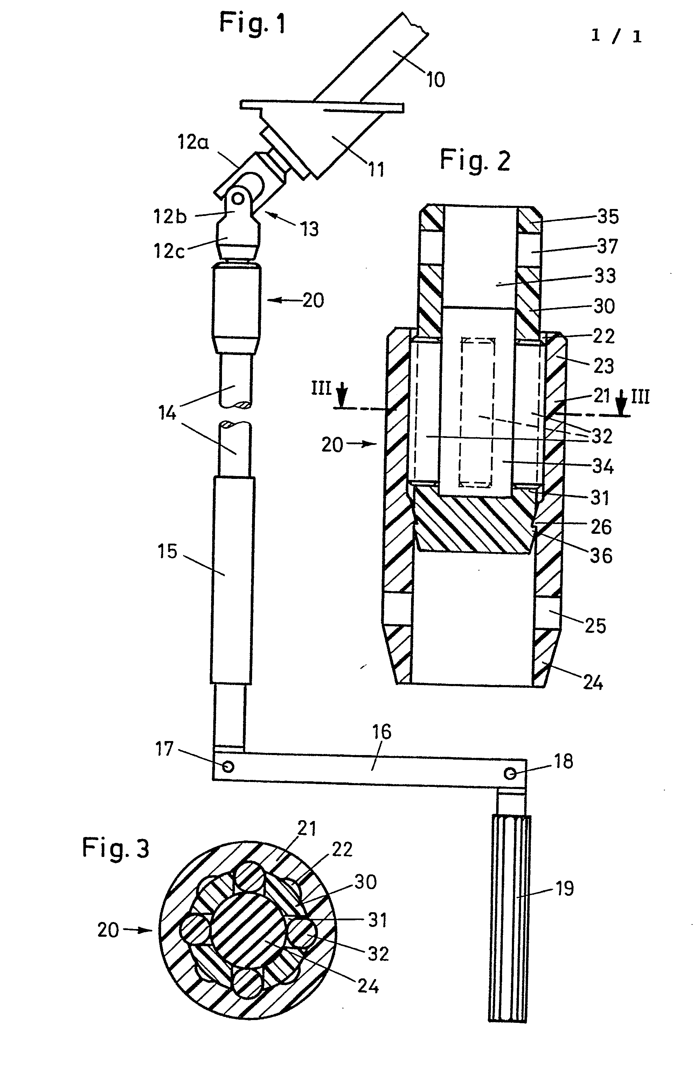

Wie aus Fig. 2 und 3 deutlich hervorgeht, besteht dieser Einbauteil 20 aus einer äusseren Hülse 21, die auf ihrem inneren Umfang beispielsweise acht Rastvertiefungen 22 in in einer oberen Partie 23 aufweist. Die untere Partie 24 hat einen Innendurchmesser, der dem Aussendurchmesser der Antriebsstange 14 entspricht und sie ist auch durchbohrt, um mit einem Stift durch die Bohrung 25 die beiden Teile starr miteinander zu verbinden.

In diese äussere Hülse 21 ist eine innere Hülse 30 eingesetzt. Diese innere Hülse 30 weist auf dem Umfang verteilt vier schlitzartige Oeffnungen 31 für die Aufnahme von je einem als Rastelement dienenden zylindrischen Körper 32 auf.

Im Hohlraum 33 der inneren Hülse 30 befindet sich ein elastisches Druckelement 34, beispielsweise aus natürlichem oder künstlichem Kautschuk. Damit werden die zylindrischen Körper 32 radial nach aussen in die Rastvertiefungen 22 gepresst. Der obere freie Teil 35 der inneren Hülse 30 hat einen Aussendurchmesser, der mit dem Innendurchmesser der Hülse 12c korrespondiert.

Durch eine Rastschulter 26 am innenseitigen Umfang der äusseren Hülse 21 und eine gegengleiche Halteschulter 36 am aussenseitigen Umfang der inneren Hülse 30 können die beiden Hülsen 21, 30 untrennbar ineinandergestossen werden.

Zur starren Befestigung mit der Hülse 12c weist auch die innere Hülse 30 eine Bohrung 37 für die Aufnahme eines Haltestiftes auf.

Mit einem derartigen Kupplungselement 20 können praktisch alle vorkommenden Fälle beherrscht werden.

Durch Wahl der Shore-Häre des Druckelementes 34 kann der Anpressdruck der zylindrischen Körper 32 eingestellt werden. Das Druckelement 34 könnte aber auch aus Scheiben mit unterschiedlicher Shore-Härte zusammengesetzt werden und schliesslich kann die Anzahl der zylindrischen Körper 32 im dargestellten Beispiel zwischen einem und vier solcher Körper 32 ausgewählt werden. Damit können grosse Rolladen mit einem erheblichen Gewicht ebensogut angetrieben werden wie kleine Lamellenstoren, ohne dass unterschiedliche Elemente benötigt würden. Der Monteur kann die jeweils günstigste Kombination selbst aus einem Bausatz zusammenstellen.

Wie aus Fig. 1 leicht zu entnehmen ist, bietet auch der nachträgliche Einbau keine besonderen Schwierigkeiten. Es muss lediglich die Antriebsstange 14 von der Hülse 12c gelöst werden, dann das Element 20 an deren Stelle in diese Hülse 12c und schliesslich die Antriebsstange 14 in die äussere Hülse 21 des Elementes 20 eingesetzt werden. Ueblicherweise besteht ein genügend grosser Abstand zwischen dem unteren Ende des Kurbelgriffes 19 und einem Fenstersims , damit ein solches Element mit einer ungefähren Einbaulänge von etwa 5 cm noch eingebaut werden kann.

Patentansprüche

1.     Antriebsvorrichtung für die Bedienungsanordnung einer Jalousie für Sonnen- und Wetterschutz,bei der
die Drehkraft mit einer drehbaren Antriebsstange über ein
Universalgelenk auf die Jalousie-Welle übertragbar ist,
dadurch gekennzeichnet, dass bei der Verbindungsstelle zwischen dem Universalgelenk (13) und der Antriebsstange (14)
ein die Drehkraft begrenzendes, als Einbauteil mit unveränderlicher axialer Länge  ausgebildetes Kupplungselement
(20), eingesetzt ist.

2.     Vorrichtung nach Patentanspruch 1, dadurch
gekennzeichnet, dass das Kupplungselement als Rutschkupplung
ausgebildet ist, und aus einer äusseren Hülse (21) mit
innenseitigen Rastvertiefungen (22), einer als Käfig für
Rastelemente (32) ausgebildeten inneren Hülse (30) und aus wenigstens einem auf die Rastelemente (32) einwirkenden, elastischen Druckelement (34) innerhalb der inneren Hülse (30) besteht.

3.    Vorrichtung nach Patentanspruch 2, dadurch gekennzeichnet, dass die Rastelemente (32) walzenförmig ausgebildet sind.

4.    Vorrichtung nach Patentanspruch 3, dadurch gekennzeichnet, dass als elastisches Druckelement (34) ein den Innenraum (33) der inneren Hülse (30) wenigstens teilweise ausfüllender Zapfen aus Kautschuk verwendet ist.

5.    Vorrichtung nach Patentanspruch 4, dadurch gekennzeichnet, dass das elastische Druckelement (34) aus mehreren einzelnen Scheiben besteht.

6.    Vorrichtung nach Patentanspruch 5, dadurch gekennzeichnet, dass alle das Druckelement (34) bildenden Scheiben eine gleich Shore-Härte aufweisen.

7.    Vorrichtung nach Patentanspruch 6, dadurch gekennzeichnet, dass die Kupplungskraft durch Wahl der Shore-Härte des Druckelementes (34) durch Wahl der Länge
des Druckelementes (34) und/oder durch Vermindern oder
Vermehren der Anzahl Rastelemente (32) einstellbar ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 463 846 (LAMELCOLOR S.A.) <br> * Gesamtes Dokument * | 1 | E 06 B 9/205 |
| A | | 2 | |
| X | DE-U-1 896 002 (FA. JUSTIN HÜPPE) <br> * Gesamtes Dokument * | 1 | |
| A | | 2 | |
| | | | **RECHERCHIERTE SACHGEBIETE (Int. Cl.4)** |
| | | | E 06 B 9/00 |

Der vorliegende Recherchenbericht wurde für alle Patentansprüche erstellt.

| Recherchenort <br> BERLIN | Abschlußdatum der Recherche <br> 04-07-1985 | Prüfer <br> KRABEL A.W.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82